# EUROPEAN PATENT APPLICATION

(11) **EP 4 607 661 A1**
(43) Date of publication of application: **27.08.2025**
(21) Application number: 25160105.0
(22) Date of filing: 25.02.2025
(51) Int. Cl.: H01M 50/152, H01M 50/148, H01M 50/169, H01M 50/179, H01M 50/528, H01M 50/533, H01M 50/538, H01M 50/559, H01M 50/566, H01M 50/567

(54) **BATTERY CELL, MANUFACTURING METHOD THEREOF AND BATTERY MODULE**

(30) Priority: 26.02.2024 KR 20240027549; 09.09.2024 KR 20240122665
(71) Applicant: SK On Co., Ltd., Seoul 03161 (KR)
(72) Inventor: PAK, Byeong Jun, 34124 Daejeon (KR); JU, Seung Hoon, 34124 Daejeon (KR)
(74) Representative: Stolmár & Partner Patentanwälte PartG mbB

(57) **Abstract**

The present disclosure provides a battery cell including: a cell case including a side wall having an accommodation space and an upper plate having a through-hole; an electrode terminal coupled to the through-hole and having a coupling hole; an electrode assembly disposed in the accommodation space; and a first current collector electrically connecting the electrode terminal and the electrode assembly, where the first current collector includes a connection terminal having a protrusion inserted into the coupling hole, a welding space is formed between an upper end of a side surface of the protrusion and an inner surface of the coupling hole, and a welding area is formed in the welding space by welding performed on an outer side of the cell case in a state in which the protrusion is inserted into the coupling hole.

## Description

### TECHNICAL FIELD

The present disclosure relates to a battery cell (secondary battery) capable of being charged and discharged, a manufacturing method thereof and a battery module.

### BACKGROUND

A secondary battery cell, unlike a primary battery, is convenient in that the secondary battery cell may be charged and discharged, and are thus receiving much attention as power sources for various mobile devices, electric vehicles, and energy storage devices.

A secondary battery cell may be manufactured as a pouch-type cell or a can-type cell. The pouch-type cell has a structure in which an electrode assembly is accommodated inside a flexible cell case (pouch). The can-type cells have a structure in which an electrode assembly is accommodated inside a rigid cell case (can) and may be formed of a cylindrical cell, a square cell, a coin-type cell.

### SUMMARY

A secondary battery cell may include an electrode assembly and a cell case accommodating the electrode assembly. The electrode assembly may be connected to a current collector, and the current collector may be welded to an electrode terminal of the battery cell and electrically connected to the electrode terminal.

In a conventional battery cell, the current collector and the electrode assembly may be coupled to each other, and then, in a state in which the electrode assembly is inserted into a cell case, a horn for ultrasonic welding may be inserted into a hollow space formed in a center of the electrode assembly, and the current collector and the electrode terminal may be ultrasonically welded to electrically connect the current collector and the electrode terminal.

However, when ultrasonic welding is performed through the hollow space of the electrode assembly in a state in which the electrode assembly is inserted into the cell case, because welding foreign substances such as fume or spatter are formed inside the battery cell, there may be a problem in which the battery cell is defective due to the foreign substances.

According to an aspect of the present disclosure, provided is a battery cell capable of improving defects caused by foreign substances generated when coupling an electrode terminal and a current collector, a manufacturing method thereof, and a battery module.

According to an aspect of the present disclosure, provided is a battery cell capable of preventing foreign substances (impurities) caused by welding an electrode terminal and a current collector from affecting an internal configuration of the battery cell, a manufacturing method thereof, and a battery module.

According to an aspect of the present disclosure, provided is a battery cell capable of improving damage to an electrode assembly due to welding heat, a manufacturing method thereof, and a battery module.

According to an aspect of the present disclosure, provided is a battery cell capable of improving the rigidity of an electrode terminal, a manufacturing method thereof, and a battery module.

According to an aspect of the present disclosure, provided is a battery cell capable of easily confirming a welding shape and welding quality of a welding area, a manufacturing method thereof, and a battery module.

A battery cell and/or a battery module of the present disclosure may be widely applied to devices within green technology fields such as an electric vehicle, a battery charging station, and solar power generation and wind power generation using batteries. Additionally, the battery cell and/or battery module of the present disclosure may be used in eco-friendly electric vehicles, hybrid vehicles, etc. to prevent climate change by suppressing air pollution and greenhouse gas emissions.

A battery cell according to the present disclosure, may include: a cell case including a side wall having an accommodation space formed therein and an upper plate having a through-hole formed therein; an electrode terminal coupled to the through-hole and having a coupling hole formed therein; an electrode assembly disposed in the accommodation space of the cell case; and
a first current collector electrically connecting the electrode terminal and the electrode assembly, and the first current collector may include a connection terminal having a protrusion inserted into the coupling hole, a welding space, which is a space for welding between the protrusion and the electrode terminal, may be formed between an upper end of a side surface of the protrusion and the inner surface of the coupling hole, and a welding area may be formed in the welding space by welding performed on an outer side (outside) of the cell case in a state in which the protrusion is inserted into the coupling hole.

According to a preferred embodiment, the protrusion may include a cross-sectional reduction portion formed on the upper end of the side surface of the protrusion and having a narrower width than the side surface of the protrusion, and the welding space may be formed between the inner surface of the coupling hole and the cross-sectional reduction portion of the protrusion.

According to a preferred embodiment, the cross-sectional reduction portion may have a shape in which a width of the cross-sectional reduction portion becomes narrower toward an upper side of the cross-sectional reduction portion.

According to a preferred embodiment, the cross-sectional reduction portion may have a chamfer shape or a round shape.

According to a preferred embodiment, the electrode terminal may include an inner edge portion formed on an upper end of the inner surface of the coupling hole and having a narrower width than the inner surface of the coupling hole, and the welding space may be formed between the inner edge portion of the electrode terminal and the side surface of the protrusion.

According to a preferred embodiment, the inner edge portion may include at least one of a step region having a step portion formed from the inner surface of the coupling hole or a chamfer region having an inclination from the inner surface of the coupling hole.

According to a preferred embodiment, a side surface of the protrusion includes an inclined surface guiding the protrusion to be inserted into the coupling hole, the inclined surface has a shape in which a width of an upper side thereof is narrower than that of a lower side thereof, and at least a portion of the inner surface of the coupling hole may have a shape corresponding to the inclined surface of the protrusion.

According to a preferred embodiment, the protrusion may be provided as a solid type in which an interior thereof is filled.

According to a preferred embodiment, the first current collector may further include a current collecting plate electrically connected to a first electrode tab of the electrode assembly, and the current collecting plate may be connected to the connection terminal.

According to a preferred embodiment, the connection terminal may further include a support portion coupled to the current collecting plate, and the protrusion may extend from the support portion and may have a shape passing through an opening formed in the current collecting plate.

According to a preferred embodiment, the current collecting plate and the connection terminal may be manufactured separately and then coupled to each other.

According to a preferred embodiment, the current collecting plate and the connection terminal may be integrally formed.

According to a preferred embodiment, the cell case may have a circular cross-sectional shape, the through-hole may be formed in a center of the upper plate, and the electrode terminal may be riveted to the through-hole of the cell case.

According to a preferred embodiment, the side wall may have a tube shape, and the upper plate may have a plate shape covering a top side of the accommodation space, and the side wall and the upper plate may be integrally formed.

According to a preferred embodiment, the battery cell may further include a cap plate covering a bottom side of the accommodation space of the cell case, and the cap plate may be coupled to the cell case by crimping or welding.

A manufacturing method of a battery cell according to the present disclosure may include: riveting an electrode terminal into a through-hole formed in an upper plate of a cell case having a shape in which a bottom side is open; electrically connecting a first current collector to an electrode assembly; inserting the electrode assembly into an accommodation space of the cell case; and a welding operation of welding the electrode terminal and the first current collector, and the first current collector may include a connection terminal having a protrusion inserted into a coupling hole of the electrode terminal, a welding space, which is a space for welding between the protrusion and the electrode terminal, may be formed between an upper end of a side surface of the protrusion and an the inner surface of the coupling hole, and in the welding operation, energy is applied to the welding space from an outside of the cell case in a state in which the protrusion is inserted into the coupling hole, so that the electrode terminal and the protrusion are welded.

According to a preferred embodiment, the protrusion may include a cross-sectional reduction portion formed on the upper end of the side surface of the protrusion and having a narrower width than the side surface of the protrusion, and the welding space may be formed between the inner surface of the coupling hole and the cross-sectional reduction portion of the protrusion.

According to a preferred embodiment, the electrode terminal may include an inner edge portion formed on an upper end of the inner surface of the coupling hole and having a narrower width than the inner surface of the coupling hole, and the welding space may be formed between the inner edge portion of the electrode terminal and the side surface of the protrusion.

According to a preferred embodiment, the first current collector may further include a current collector plate electrically connecting a first electrode tab of the electrode assembly and the connection terminal, and the current collector plate and the connection terminal may be manufactured separately and then coupled by welding or formed integrally by forging.

A manufacturing method of a battery cell according to the present disclosure may further include installing a cap plate on an open bottom side of the cell case, wherein the installing the cap plate 150 may be performed by coupling the cap plate to the cell case crimping or welding.

A battery module according to the present disclosure may include: a plurality of battery cells; and a module housing accommodating the plurality of battery cells, and at least one of the plurality of battery cells may include: a cell case including a side wall having an accommodation space formed therein and an upper plate having a through-hole formed therein; an electrode terminal coupled to the through-hole and having a coupling hole formed therein; an electrode assembly disposed in the accommodation space of the cell case; and a first current collector electrically connecting the electrode terminal and the electrode assembly, and the first current collector may include a connection terminal having a protrusion inserted into the coupling hole, a welding space, which is a space for welding between the protrusion and the electrode terminal, may be formed between an upper end of a side surface of the protrusion and an the inner surface of the coupling hole, and a welding area may be formed in the welding space through welding performed from an outside of the case in a state in which the protrusion is inserted into the coupling hole.

According to a preferred embodiment of the present disclosure, defects caused by foreign substances generated when coupling an electrode terminal and a first current collector may be improved.

According to a preferred embodiment of the present disclosure, it may be possible to prevent foreign substances (impurities) caused by welding of an electrode terminal and a first current collector from affecting an internal configuration of a battery cell.

According to a preferred embodiment of the present disclosure, damage to an electrode assembly caused by welding heat may be improved.

According to a preferred embodiment of the present disclosure, the rigidity of an electrode terminal may be improved.

According to a preferred embodiment of the present disclosure, since an electrode terminal and a first current collector are welded from the outside of a cell case in a state in which the first current collector is exposed to the outside, a welding shape and welding quality of the welding area may be easily confirmed.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell according to a preferred embodiment;
FIG. 2 is an exploded perspective view of the battery cell illustrated in FIG. 1;
FIG. 3 is a cross-sectional view taken along line I-I' of FIG. 2;
FIG. 4 is a cross-sectional view and a partially enlarged view illustrating a portion where an electrode terminal is installed in the cross-sectional view illustrated in FIG. 3;
FIG. 5 is a cross-sectional view illustrating a modified embodiment of the battery cell illustrated in FIG. 4;
FIG. 6 is a cross-sectional view illustrating another modified embodiment of the battery cell illustrated in FIG. 4;
FIG. 7 is a cross-sectional view illustrating another modified embodiment of the battery cell illustrated in FIG. 4;
FIG. 8 is a perspective view illustrating a modified embodiment of a first current collector;
FIG. 9 is a cross-sectional view illustrating a state in which the first current collector illustrated in FIG. 8 is applied to the cross-section of FIG. 4;
FIGS. 10 to 12 are cross-sectional views illustrating the modified embodiment of FIG. 9;
FIG. 13 is a cross-sectional view of a battery cell in accordance with another embodiment;
FIG. 14 is a cross-sectional view of a battery cell in accordance with another embodiment;
FIG. 15 is a flowchart illustrating a manufacturing method of a battery cell according to a preferred embodiment;
FIGS. 16A to 16E are cross-sectional views illustrating a manufacturing method of a battery cell; and
FIG. 17 is a perspective view of a battery module according to a preferred embodiment.

### DETAILED DESCRIPTION

The same reference numeral or symbol written in each accompanying drawing of the specification refers to parts or components that perform substantially the same function. The present inventive concept is described using the same reference numeral or symbol even in different exemplary embodiments for easy description and appreciation. In this aspect, although all components having the same reference numeral are illustrated in a plurality of drawings, the plurality of drawings do not necessarily refer to a single exemplary embodiment.

In this specification, the singular also includes the plural unless specifically stated otherwise in the phrase. It will be further understood that the terms "comprises," "comprising," "includes" and/or "including", when used herein, specify the presence of stated features, integers, steps, operations, elements, components and/or combinations thereof, but do not preclude the presence or addition of one or more other features, integers, steps, operations, elements, components, and/or groups thereof.

In addition, it should be noted in advance that the expressions such as "above," "upper," "below", "beneath," "lower," "side," "front," and "rear" are based on the direction illustrated in the drawings, and may be expressed differently if the direction of the object is changed.

In addition, in the present specification and claims, terms including ordinal numbers such as "first" and "second" may be used to distinguish between components. These ordinal numbers are used to distinguish the same or similar components from each other, and the meaning of the terms should not be construed as limited by the use of these ordinal numbers. For example, the components combined with these ordinal numbers should not be construed as limiting the order of use or arrangement of the components. If necessary, the ordinal numbers may be used interchangeably.

Hereinafter, with reference to the drawings, specific embodiments of the present disclosure will be described. However, this is illustrative only and the present disclosure is not limited to the specific embodiments illustrated exemplarily.

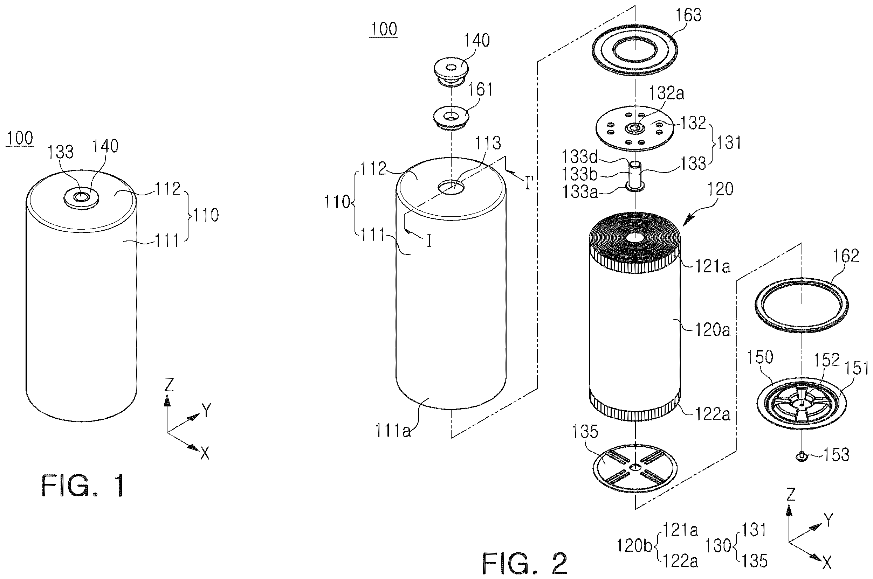

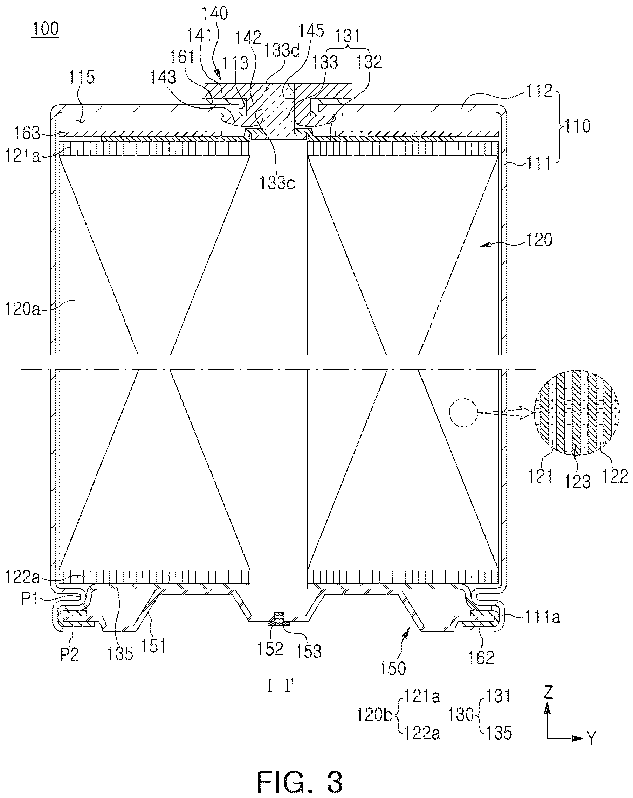

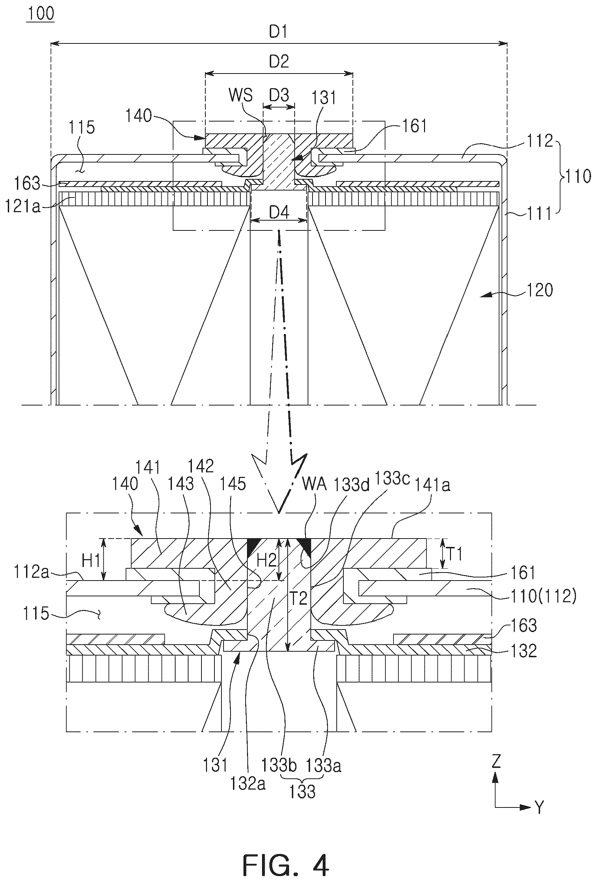

FIG. 1 is a perspective view of a battery cell 100 according to a preferred embodiment. FIG. 2 is an exploded perspective view of the battery cell 100 illustrated in FIG. 1. FIG. 3 is a cross-sectional view along line I-I' of FIG. 2. FIG. 4 is a cross-sectional view and a partial enlarged view illustrating a portion in which an electrode terminal 140 is installed in the cross-sectional view illustrated in FIG. 3.

Referring to FIGS. 1 to 4, a battery cell 100 according to a preferred embodiment may include a cell case 110 including a side wall 111 having an accommodation space formed therein and an upper plate 112 having a through-hole 113 formed therein, an electrode terminal 140 coupled to the through-hole 113 and having a coupling hole 145 formed therein, an electrode assembly 120 disposed in the accommodation space of the cell case 110, and a first current collector 131 electrically connecting the electrode terminal 140 and the electrode assembly 120. The first current collector 131 may include a connection terminal 133 having a protrusion 133b inserted into the coupling hole 145 and coupled to the coupling hole 145. The protrusion 133b may be fitted into the coupling hole 145. A welding space WS, which is a space for welding between the protrusion 133b and the electrode terminal 140, may be formed between an upper end of a side surface 133c of the protrusion 133b and an inner surface of the coupling hole 145. A welding area WA may be formed in the welding space WS through welding performed on the outer side of the cell case 110 in a state in which the protrusion 133b is inserted into and coupled to the coupling hole 145. The electrode terminal 140 and the first current collector 131 may be welded from the outside of a cell case 110.

The battery cell 100 according to the present disclosure may be formed as a cylindrical cell, but the present disclosure is not limited thereto. In the present disclosure, a battery cell 100 according to a preferred embodiment will be described using a cylindrical cell as an example.

The cell case 110 may include a side wall 111 having an accommodation space 115 formed therein, and an upper plate 112 having a through-hole 113 formed therein. The accommodation space 115 may be formed by the side wall 111 and the upper plate 112 of the cell case 110. The cell case 110 may have a cylindrical shape in which one side (e.g., a lower side) is open. The cell case 110 may have a hollow cylindrical shape including a circular cross-section.

The side wall 111 may have a tube shape, and the upper plate 112 may have a plate shape covering a top side of the accommodation space 115.

The side wall 111 may have a circular tube shape. The upper plate 112 may have an overall flat plate shape. The thicknesses of the upper plate 112 and the side wall 111 in the cell case 110 may be variously changed. For example, the upper plate 112 and the side wall 111 may have the same thickness, and it may also be possible for the thickness of the upper plate 112 to have a greater value than the thickness of the side wall 111.

The cell case 110 may include a metal material such as aluminum or an aluminum alloy, but the material of the cell case 110 may be variously changed.

As illustrated in FIGS. 1 to 4, the side wall 111 and the upper plate 112 of the cell case 110 may be formed integrally. For example, the cell case 110 may be manufactured in a shape in which the side wall 111 and the upper plate 112 are formed integrally by deep drawing a metal sheet. When the cell case 110 is formed integrally, a process of bonding the side wall 111 and the upper plate 112 is not required, so that the manufacturing of the cell case 110 and/or the battery cell 100 may be facilitated and the workability may be improved.

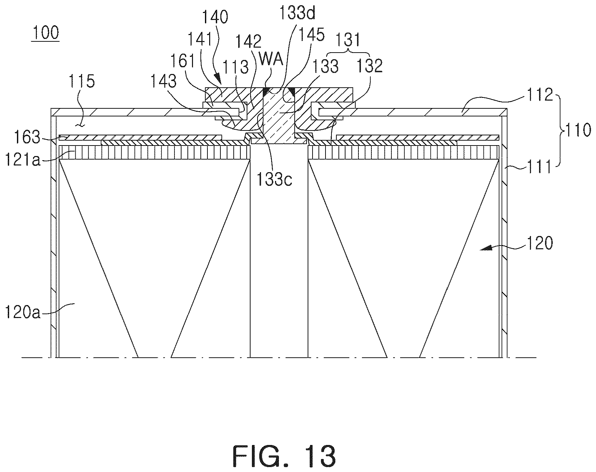

However, the cell case 110 of the present disclosure is not limited to a configuration in which the side wall 111 and the upper plate 112 are formed integrally, and the side wall 111 and the upper plate 112 may also be manufactured separately and then coupled or bonded to each other by welding or the like (see FIG. 13).

The through-hole 113 may be formed in the upper plate 112 of the cell case 110. The through-hole 113 may be provided for coupling the electrode terminal 140. The cell case 110 may have a circular cross-sectional shape, and the through-hole 113 may be formed in the center of the upper plate 112. In this case, the electrode terminal 140 coupled to the through-hole 113 may be disposed in the center of the upper plate 112.

The electrode terminal 140 may be coupled to the through-hole 113. At least a portion of the electrode terminal 140 may be exposed to the outside of the cell case 110. The electrode terminal 140 may pass through the through-hole 113 formed in the upper plate 112 of the cell case 110 and at least a portion of the electrode terminal may be exposed to the outside of the cell case 110. When the first current collector 131 is connected to a cathode, the electrode terminal 140 may correspond to a cathode terminal, and vice versa.

The electrode terminal 140 may be riveted to the through-hole 113 of the cell case 110. The electrode terminal 140 may be connected to the upper plate 112 by a riveting process in a state in which the electrode terminal 140 is inserted into the through-hole 113 of the upper plate 112. The electrode terminal 140 may be riveted to the upper plate 112 of the cell case 110. The electrode terminal 140 may have a rivet shape as a whole.

The electrode terminal 140 may include a first portion 141 disposed on an upper side of the upper plate 112, a second portion 142 extending downwardly from the first portion 141 and passing through the through-hole 113, and a third portion 143 extending from the second portion 142 and disposed on a lower side of the upper plate 112. The first portion 141 may be disposed on the outside of the cell case 110, and the third portion 143 may be disposed in the accommodation space 115 of the cell case 110. The third portion 143 may have a shape deformed by pressure and extending radially outwardly of the cell case 110. The upper plate 112 may be disposed between the first portion 141 and the third portion 143. An outer diameter D2 of the first portion 141 and an outer diameter of the third portion 143 have a value greater than a diameter of the through-hole 113, and an outer diameter of the second portion 142 may have a value smaller than the diameter of the through-hole 113. The outer diameter D2 of the first portion 141 may have a value smaller than an outer diameter D1 of the cell case 110. The outer diameter D2 of the first portion 141 may be set in consideration of a space (area) for welding with the bus bar connected to the first portion 141.

The coupling hole 145 may be formed in the electrode terminal 140. The coupling hole 145 may have a shape penetrating through an upper side and a lower side of the electrode terminal 140.

At least a portion of the connection terminal 133 of the first current collector 131 may be inserted into the coupling hole 145. The protrusion 133b of the connection terminal 133 may be inserted into the coupling hole 145 of the electrode terminal 140. The coupling hole 145 may have a shape corresponding to the protrusion 133b of the connection terminal 133. For example, when the protrusion 133b includes a cylindrical shape, the coupling hole 145 may include a circular cross-section. An outer diameter D3 of the protrusion 133b may correspond to a diameter of the coupling hole 145 or have a similar value thereto. When the outer diameter D3 of the protrusion 133b has a value slightly smaller than the diameter of the coupling hole 145, the protrusion 133b may be easily inserted into the coupling hole 145. The outer diameter D3 of the protrusion 133b may have a value smaller than the diameter of the through-hole 113. A shape of the coupling hole 145 and the protrusion 133b is not limited to a circular cross-section, and may also include a square and/or arc-shaped cross-section.

The battery cell 100 according to a preferred embodiment may further include a first gasket 161 disposed between the electrode terminal 140 and the through-hole 113 and having electrical insulation.

The first gasket 161 may be disposed between the electrode terminal 140 and the upper plate 112 to insulate between the electrode terminal 140 and the upper plate 112. The first gasket 161 may include an electrically insulating material. The first gasket 161 may serve as a sealing member sealing a space between the electrode terminal 140 and the upper plate 112.

The electrode terminal 140 may be inserted into the through-hole 113 from the outside of the upper plate 112. Since the outer diameter D2 of the first portion 141 of the electrode terminal 140 is greater than the diameter of the through-hole 113, the first portion 141 of the electrode terminal 140 may be disposed on the outside of the upper plate 112. The third portion 143 is deformed by a riveting process, so that the electrode terminal 140 may be fixed to the upper plate 112.

When the riveting process is performed in a state in which the first gasket 161 is disposed around the outside of the electrode terminal 140, the first gasket 161 may be disposed between the electrode terminal 140 and the upper plate 112. The first gasket 161 may seal and/or insulate between the electrode terminal 140 and the upper plate 112.

The electrode assembly 120 may be disposed in the accommodation space 115 of the cell case 110. The electrode assembly 120 may include a cathode, an anode, and a separator 123. One of the cathode and the anode may correspond to a first electrode 121, and the other may correspond to the second electrode 122. Each of the cathode and the anode may include a current collecting foil (or metal foil) and a composite layer applied to at least one surface of the current collecting foil. The composite layer may include an active material. The separator 123 may be interposed between the cathode and the anode to electrically insulate the cathode and the anode. The cathode, the anode, and the separator 123 may be repeatedly disposed to form the electrode assembly 120. As an example, the electrode assembly 120 may have a winding shape in which the cathode, the separator 123, and the anode are stacked and wound. However, the electrode assembly 120 is not limited to the winding structure. For example, the electrode assembly 120 may also have a stacking shape, a zigzag-folding shape, and a stack-folding shape.

The electrode assembly 120 may include the first electrode 121 and the second electrode 122 with different polarities. As an example, the first electrode 121 may be provided as the cathode and the second electrode 122 may be provided as the anode, or vice versa.

The electrode assembly 120 may include a body 120a in which the first electrode 121 and the second electrode 122 are arranged with the separator 123 interposed therebetween, and an electrode tab 120b extending from the first electrode 121 or the second electrode 122. The body 120a may include a coating portion on which an active material is coated, and the electrode tab 120b may include a non-coating portion on which an active material is not applied. The electrode tab 120b may be overlapped or laid down in a certain shape.

The electrode tab 120b may include a first electrode tab 121a extending from the first electrode 121 and a second electrode tab 122a extending from the second electrode 122. The first electrode tab 121a may include a non-coating portion of the first electrode 121, and the second electrode tab 122a may include a non-coating portion of the second electrode 122.

The electrode tab 120b may be electrically connected to a current collector 130. The current collector 130 may include the first current collector 131 and a second current collector 135. The first electrode tab 121a may be electrically connected to the first current collector 131. As an example, the first electrode tab 121a and the first current collector 131 may be electrically connected to each other by welding or the like. The second electrode tab 122a may be electrically connected to at least one of the second current collector 135, a cap plate 150, or the side wall 111 of the cell case 110. As an example, the second electrode tab 122a and the second current collector 135 may be in contact with and electrically connected to each other, and may also be coupled to each other by welding such as ultrasonic welding, laser welding, or the like. However, the method of coupling the second electrode tab 122a and the second current collector 135 is not limited thereto.

The first current collector 131 may electrically connect the electrode terminal 140 and the electrode assembly 120.

The first current collector 131 may be electrically connected to the first electrode tab 121a on a lower side, and may be electrically connected to the electrode terminal 140 on an upper side. As an example, the first current collector 131 and the first electrode tab 121a may be coupled to each other by welding such as ultrasonic welding, laser welding, resistance welding, or the like, but a coupling method thereof is not limited thereto. The first current collector 131 and the electrode terminal 140 may be coupled to each other by welding such as laser welding.

The first current collector 131 may include the connection terminal 133 having the protrusion 133b inserted into the coupling hole 145 of the electrode terminal 140. The protrusion 133b of the connection terminal 133 may be inserted into the coupling hole 145 formed in the electrode terminal 140.

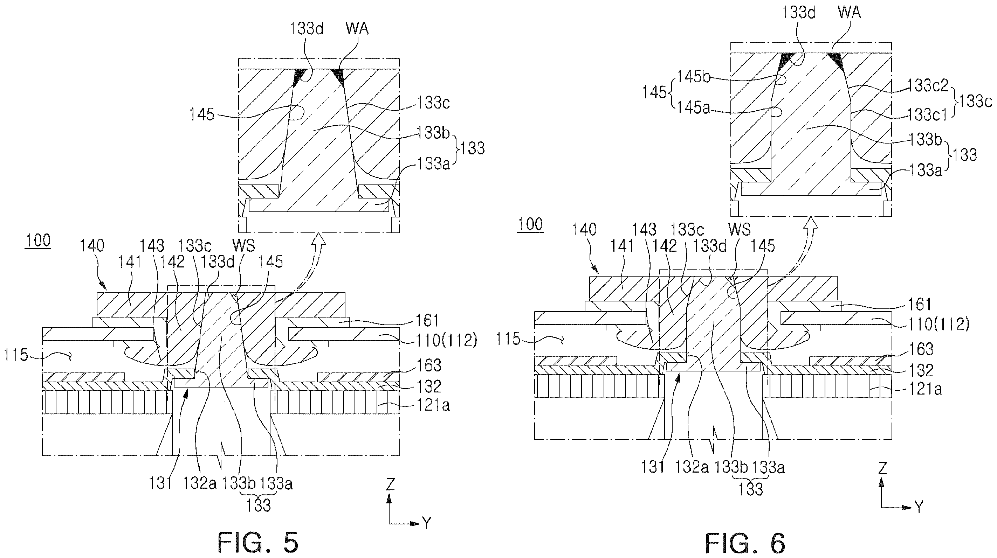

The protrusion 133b of the connection terminal 133 may have a cylinder shape having a circular cross-section. The protrusion 133b of the connection terminal 133 and the coupling hole 145 of the electrode terminal 140 may have shapes corresponding to each other. For example, when the protrusion 133b includes a cylinder shape, the coupling hole 145 may include a circular cross-section. In order to easily insert the protrusion 133b into the coupling hole 145, the outer diameter D3 of the protrusion 133b may have a value slightly smaller than the diameter of the coupling hole 145. The shapes of the coupling hole 145 and the protrusion 133b are not limited to a circular cross section. For example, a side surface 133c of the protrusion 133b may be formed as a plane parallel to a vertical direction, which is a welding direction. Alternatively, at least a portion of the side surface 133c of the protrusion 133b may include an inclined surface (see FIGS. 5 to 7 and FIGS. 10 to 12). The diameter of the coupling hole 145, the outer diameter D3 of the protrusion 133b, and the diameter of the coupling hole 145 may be variously changed.

The first current collector 131 may further include a current collecting plate 132 electrically connected to the first electrode tab 121a of the electrode assembly 120. The current collecting plate 132 may be connected to the connection terminal 133. That is, the first current collector 131 may include the current collecting plate 132 electrically connected to the first electrode tab 121a and the connection terminal 133 connected to the current collecting plate 132.

The current collecting plate 132 of the first current collector 131 may be coupled to the first electrode tab 121a by welding. The current collecting plates 132 may be coupled to each other by laser welding, ultrasonic welding, resistance welding, or the like, in a state in which the current collecting plates 132 is disposed to be in contact with the first electrode tab 121a.

The connection terminal 133 may include the protrusion 133b inserted into the coupling hole 145 of the electrode terminal 140. The connection terminal 133 may further include a support portion 133a coupled to the current collecting plate 132. That is, the connection terminal 133 may include the support portion 133a coupled to the current collecting plate 132 and the protrusion 133b extending upwardly from the support portion 133a and inserted into the coupling hole 145 of the electrode terminal 140. The support portion 133a and the protrusion 133b may be formed integrally. The support portion 133a and the protrusion 133b may be manufactured integrally by forging, press processing, or the like.

The protrusion 133b of the connection terminal 133 may have a shape extending from the support portion 133a and passing through an opening 132a formed in the current collecting plate 132. The connection terminal 133 may be combined with the current collecting plate 132 in a state in which the protrusion 133b is disposed to pass through the opening 132a of the current collecting plate 132. An outer diameter D4 of the support portion 133a may have a value larger than the diameter of the opening 132a and the outer diameter D3 of the protrusion 133b.

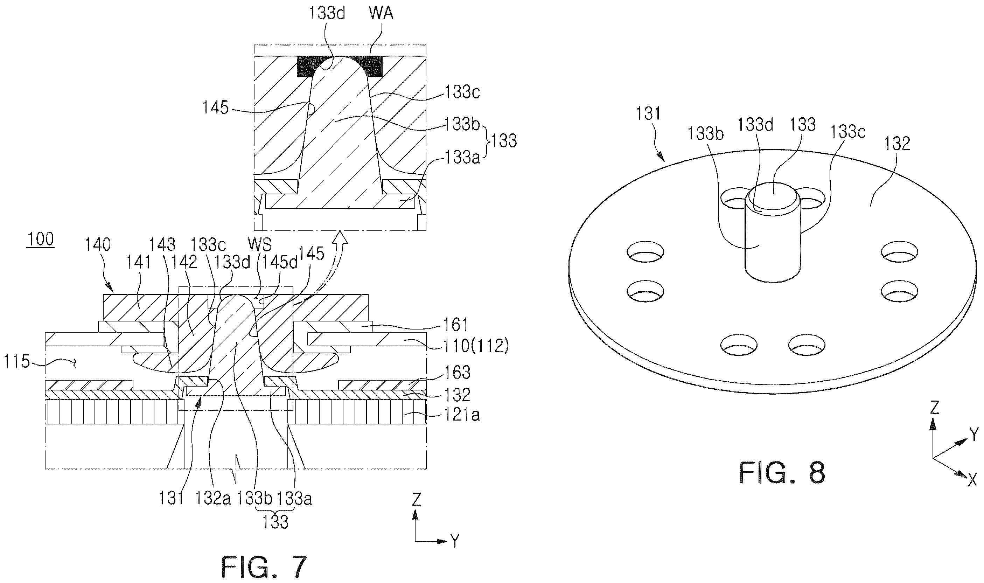

The current collecting plate 132 and the connection terminal 133 may be manufactured separately and then coupled to each other. The current collecting plate 132 may have a plate shape that is relatively thinner than the connection terminal 133, and the connection terminal 133 may have a cylinder shape that is relatively thicker than the current collecting plate 132. Accordingly, when the current collector plate 132 and the connection terminal 133 are manufactured separately, each of the current collector plate 132 and the connection terminal 133 may be easily manufactured, and a design freedom for a thickness T2 of the connection terminal 133 may be improved. The connection terminal 133 and the current collector plate 132 may be bonded by welding. However, a method of bonding the connection terminal 133 and the current collector plate 132 is not limited thereto, and other bonding methods such as a fitting joint may be applied thereto. Meanwhile, in the present disclosure, the current collector plate 132 and the connection terminal 133 are not limited to a separate structure, and may have an integrated structure (see FIGS. 8 to 12).

The connection terminal 133 of the first current collector 131 may be coupled to the electrode terminal 140 by welding. The connection terminal 133 may be coupled to the electrode terminal 140 by welding from the outside of the cell case 110 in a state in which the protrusion 133b is inserted into the connection hole 145. For example, the electrode terminal 140 and the connection terminal 133 of the first current collector 131 may be coupled to each other through laser welding and electrically connected to each other. A direction in which the laser is irradiated during laser welding may be perpendicular to the upper plate 112.

A welding space WS, which is a space for welding between the protrusion 133b and the electrode terminal 140, may be formed between the upper end of the side surface 133c of the protrusion 133b and the inner surface of the coupling hole 145. The welding space WS may be provided to weld the connection terminal 133 of the electrode terminal 140 and the first current collector 131 from the outside of the cell case 110. The welding space WS may have a groove shape recessed to be lower than an upper surface 141a of the electrode terminal 140 based on the upper surface 141a of the electrode terminal 140. That is, the welding space WS may be defined as a groove further recessed than the upper surface 141a of the electrode terminal 140. The welding space WS may have a ring shape formed along a circumference of the coupling hole 145 of the electrode terminal 140. For example, the welding space WS may be formed as a circular ring-shaped groove formed to be recessed in a boundary between the electrode terminal 140 and the protrusion 133b.

The welding area WA may be formed in the welding space WS by welding performed on the outside of the cell case 110 in a state in which the protrusion 133b is inserted into the coupling hole 145. The welding area WA may be formed with a molten bead cured after a portion of the electrode terminal 140 and/or a portion of the protrusion 133b of the connection terminal 133 is melted by welding heat during welding. At least a portion of the welding space WS may be filled with the molten bead to form the welding area WA. In FIG. 4, the welding space WS and the welding area WA are illustrated as having the same shape, but the welding space WS and the welding area WA may have different shapes. For example, since the electrode terminal 140 and the protrusion 133b of the connection terminal 133 are melted by the welding heat by laser welding, a width of the welding area WA may be greater than a width of the welding space WS.

When welding the protrusion 133b of the connection terminal 133 and the electrode terminal 140, welding energy may concentrate on a ring-shaped welding space WS. Since the welding energy is concentratedly absorbed by surfaces of the protrusion 133b and the electrode terminal 140 forming the welding space WS, welding between the protrusion 133b and the electrode terminal 140 may be performed even with small welding energy. Accordingly, damage to the electrode assembly 120 due to the welding heat may be significantly reduced. Specifically, since the welding is performed in a state in which the welding space WS between the protrusion 133b of the connection terminal 133 and the electrode terminal 140 is exposed to the outside of the cell case 110, the welding energy may be directly applied to the protrusion 133b of the connection terminal 133 and the electrode terminal 140, so that the energy required for welding may be significantly reduced.

Additionally, since the welding between the protrusion 133b and the electrode terminal 140 is possible even with small welding energy, it may be possible to prevent a laser from passing through a gap between the protrusion 133b and the electrode terminal 140 and being irradiated to the electrode assembly 120 during laser welding. Accordingly, it may be possible to prevent the electrode assembly 120 from being damaged by irradiating the laser to the electrode assembly 120.

Additionally, since the electrode terminal 140 and the protrusion 133b of the connection terminal 133 are welded from the outside of the cell case 110 in a state in which the protrusion 133b of the connection terminal 133 provided on the first current collector 131 is exposed to the outside, a welding shape and welding quality of the welding area WA may be easily confirmed.

According to a preferred embodiment, the protrusion 133b of the connection terminal 133 may be inserted into the coupling hole 145 formed in a lower portion of the electrode terminal 140, and the electrode terminal 140 may be electrically connected to the connection terminal 133 of the first current collector 131 through welding performed on the outside of the cell case 110. Through this, the occurrence of welding foreign substances (for example, foreign substances such as fume or spatter) inside the battery cell 100 may be prevented. Additionally, since no metal foreign substances such as fume or spatter occur inside the cell case 110, a dust collection operation is not required inside the case during a welding operation, and accordingly, the costs for installing equipment for dust collection may be reduced.

Meanwhile, in the present disclosure, a welding method between the electrode terminal 140 and the connection terminal 133 is exemplified as laser welding, but the welding method between the two is not limited thereto, and other welding methods such as ultrasonic welding and resistance welding may also be applied.

In order to form the welding space WS, at least one of an upper side of the protrusion 133b of the connection terminal 133 and an upper side of the coupling hole 145 of the electrode terminal 140 may include a shape having a reduced cross-sectional area. That is, at least one of an upper edge portion of the protrusion 133b of the connection terminal 133 or an upper edge portion of the coupling hole 145 of the electrode terminal 140 may include a chamfer shape, a round shape, or a step shape.

For example, the protrusion 133b may include a cross-sectional reduction portion 133d formed on the upper end of the side surface 133c of the protrusion 133b and having a narrower width than the side surface 133c of the protrusion 133b, and the welding space WS may be formed between the inner surface of the coupling hole 145 and the cross-sectional reduction portion 133d of the protrusion 133b. The cross-sectional reduction portion 133d may be formed in an upper edge portion of the side surface 133c of the protrusion 133b. When the protrusion 133b and/or the coupling hole 145 include a circular cross-section, a width of the cross-section reduction portion 133d may refer to a diameter of the cross-section reduction portion 133d. Since a width of the cross-section reduction portion 133d of the protrusion 133b is narrower than a width of the side surface 133c of the protrusion 133b, a groove-shaped welding space WS may be formed between the inner surface of the coupling hole 145 and the cross-section reduction portion 133d of the protrusion 133b.

The cross-section reduction portion 133d may have a shape in which a width of the cross-section reduction portion 133d becomes narrower as the cross-section reduction portion 133d moves upwardly. In this case, the welding space WS may have a shape in which a width thereof becomes wider as the welding space WS moves upwardly. Since the width of the welding space WS is wider in an upper side than in a lower side, the welding heat may concentrate on the narrow lower side during welding between the electrode terminal 140 and the protrusion 133b in the welding space WS. Additionally, since the width of the welding space WS is wider in the upper side than in the lower side, molten metal may be restricted from flowing out from the welding space WS. The molten metal may be cured in the welding space WS to form a welding area WA.

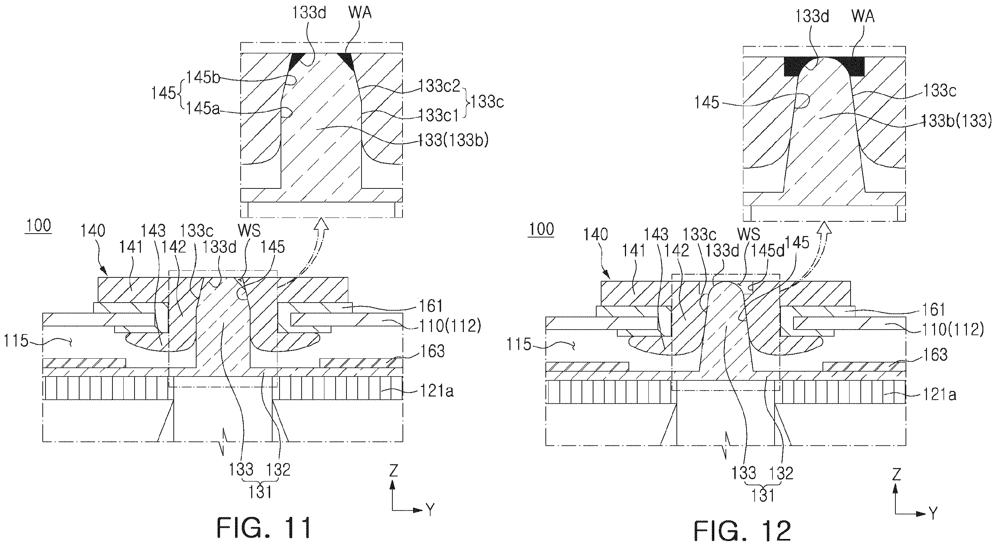

As an example, the cross-sectional reduction portion 133d may have a chamfer shape or a round shape. For example, as illustrated in FIG. 4, the cross-sectional reduction portion 133d may have a chamfer shape formed in the upper edge portion of the protrusion 133b. Alternatively, the cross-sectional reduction portion 133d may have a round shape with a smooth curved surface (see FIG. 7 and FIG. 12). However, the shape of the cross-sectional reduction portion 133d is not limited thereto, and various changes such as a step shape are possible as long as the shape has a narrower width than the side surface 133c of the protrusion 133b.

A height H1 from an upper surface 112a of the upper plate 112 of the cell case 110 to the upper surface 141a of the electrode terminal 140 may have a value greater than or equal to a height H2 from the upper surface 112a of the upper plate 112 to the protrusion 133b. In this case, it may be possible to limit or reduce the flow of the molten metal in the welding space WS upward from the upper surface 141a of the electrode terminal 140. In FIG. 4, the shape in which the upper surface 141a of the electrode terminal 140 and the upper surface of the protrusion 133b of the connection terminal 133 are substantially coincident is illustrated, but in order to control a penetration depth, it may also be possible for the height H2 of the upper surface of the protrusion 133b of the connection terminal 133 to have a value smaller than the height H1 of the upper surface 141a of the electrode terminal 140.

When the welding area WA formed by curing the molten metal does not protrude beyond the upper surface 141a of the electrode terminal 140, a bus bar for electrical connection with another battery cell 100 may be easily installed on the electrode terminal 140. That is, when the bus bar is brought into contact with the electrode terminal 140 or welded, the welding area WA may not interfere with the bus bar.

Meanwhile, when welding the protrusion 133b of the electrode terminal 140 and the connection terminal 133, the size and shape of the welding space WS formed between the upper end of the side surface 133c of the protrusion 133b and the inner surface of the coupling hole 145 may be variously changed in order to control the penetration depth. The depth, inclination, shape, and/or structure of the welding space WS may be variously changed in order to control the penetration depth and welding energy of the welding. The welding space WS may be provided by forming a shape with a decreasing cross-sectional area on at least one of an upper end of the protrusion 133b or an upper end of the inner surface of the coupling hole 145. For example, the height, inclination angle, and/or maximum width of the chamfer shape formed on the upper end of the protrusion 133b may be changed. Even when forming a round shape on the upper end of the protrusion 133b, a degree of curvature of the round shape or a depth or width of a curved surface may be controlled. Even when a step shape is formed in an upper portion of the protrusion 133b, the depth or width of the step portion may be adjusted.

The protrusion 133b may be provided as a solid type in which the interior is filled. The connection terminal 133 may have a shape in which the inside is not empty. In this case, since the protrusion 133b may fill a portion of the coupling hole 145 formed in the electrode terminal 140, the rigidity of the electrode terminal 140 may be improved. That is, even when the coupling hole 145 is formed in the electrode terminal 140, the rigidity of the electrode terminal 140 may be secured by the connection terminal 133 inserted into the coupling hole 145.

The thickness T2 of the connection terminal 133 may have a value greater than or equal to 1 time and less than or equal to 5 times a thickness T1 of the first portion 141 exposed to the outside of the cell case 110 in the electrode terminal 140. The thickness T2 of the connection terminal 133 may be defined as a sum of the thicknesses of the protrusion 133b and the support portion 133a.

The thickness T2 of the connection terminal 133 may have a value greater than or equal to 1 time, greater than or equal to 1.5 times, or greater than or equal to 2 times the thickness T1 of the first portion 141. If the thickness T2 of the connection terminal 133 has a value greater than or equal to 1 time the thickness T1 of the first portion 141 of the electrode terminal 140, when welding is performed between the electrode terminal 140 and the protrusion 133b of the connection terminal 133, the welding heat may be absorbed over a large thickness of the connection terminal 133. Accordingly, the electrode assembly 120 may be prevented from being damaged by the welding heat. Additionally, when the thickness T2 of the connection terminal 133 has a large value, because a height of a contact surface between the inner surface of the coupling hole 145 and the side surface 133c of the protrusion 133b increases, it may be difficult for the laser to penetrate into the inside of the cell case 110 through a boundary surface between the coupling hole 145 and the protrusion 133b, so that the electrode assembly 120 may be prevented from being damaged by the laser irradiation.

On the other hand, when the thickness T2 of the connection terminal 133 has a value exceeding 5 times the thickness T1 of the first portion 141, the thickness of the connection terminal 133 may increase excessively, which may reduce the energy density of the battery cell 100.

In order to electrically insulate between the first current collector 131 and the cell case 110, an insulating member 163 having electrical insulation may be disposed between the first current collector 131 and the cell case 110. As an example, the insulating member 163 may be disposed between the current collector plate 132 and the upper plate 112. The shape or arrangement position of the insulating member 163 may be variously changed.

The battery cell 100 according to a preferred embodiment may further include a cap plate 150 covering a bottom side of the accommodation space 115 of the cell case 110. The cap plate 150 may be coupled to the cell case 110 by crimping or welded to the cell case 110.

The cap plate 150 may cover the accommodation space 115 on an opposite side to the electrode terminal 140.

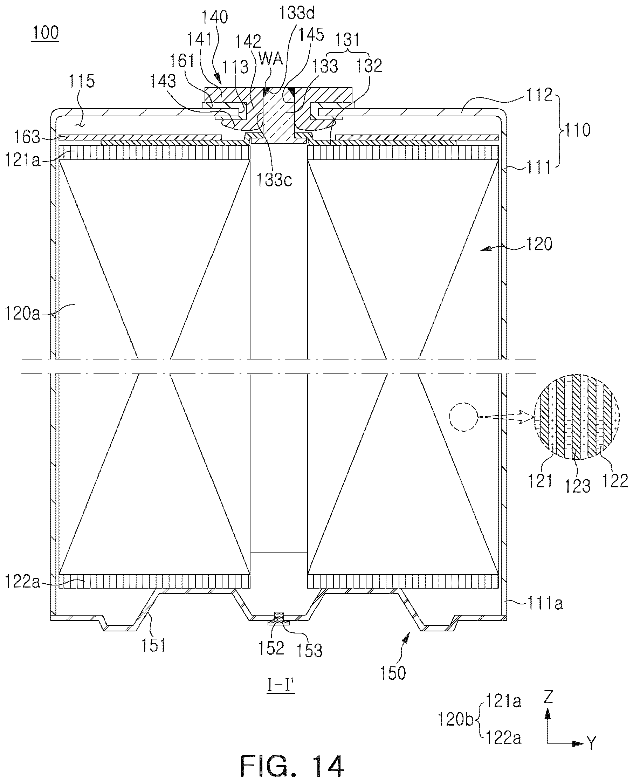

The cap plate 150 may be coupled to the side wall 111 of the cell case 110 by crimping, welding, or the like. As an example, as illustrated in FIG. 3, a beading process may be performed on an open end 111a of the side wall 111 of the cell case 110 to form a beading portion P1, and then, in a state in which the cap plate 150 is placed on the beading portion P1, the end 111a of the side wall 111 and the cap plate 150 may be crimped to form a crimping portion P2. Alternatively, the cap plate 150 may also be coupled to the end 111a of the side wall 111 by welding (see FIG. 14).

A liquid injection port 152 for injecting an electrolyte into the inside of the cell case 110 may be formed in the cap plate 150. The liquid injection port 152 may be formed in a center of the body 151 of the cap plate 150, but a position and a size thereof may be variously changed. The liquid injection port 152 may be sealed with an injection port stopper 153 after the electrolyte is injected.

A second gasket 162 for sealing may be disposed between the cap plate 150 and the side wall 111 of the cell case 110. The second gasket 162 may serve as a sealing member sealing a space between the cap plate 150 and the side wall 111.

The battery cell 100 according to a preferred embodiment may further include a second current collector 135 electrically connected to the second electrode tab 122a of the electrode assembly 120.

An upper surface of the second current collector 135 may be formed to be bonded or in contact with the second electrode tab 122a so as to be electrically connected to the second electrode tab 122a. Welding may be used to bond the second current collector 135 and the second electrode tab 122a. For example, the second current collector 135 and the second electrode tab 122a may be bonded to each other by ultrasonic welding, laser welding, resistance welding, or the like. Alternatively, the second current collector 135 may be electrically connected to the second electrode tab 122a in a state in which the second current collector 135 is not bonded to the second electrode tab 122a but is in contact with each other.

The second current collector 135 may be electrically connected to at least one of the cap plate 150 or the side wall 111 of the cell case 110. FIG. 3 illustrates a configuration in which the second current collector 135 is electrically connected to the cap plate 150 and the side wall 111 of the cell case 110. In this case, the cap plate 150 and the cell case 110 may have a second polarity. For example, when the second electrode tab 122a is an anode tab, the cap plate 150 and the cell case 110 may be charged with an anode polarity. An object electrically connected to the second current collector 135 may be variously changed according to the design specifications of the battery cell 100.

Meanwhile, in a state in which the second current collector 135 is not disposed, the second electrode tab 122a may also be directly electrically connected to the cap plate 150 (see FIG. 14).

FIG. 5 is a cross-sectional view illustrating a modified embodiment of the battery cell 100 illustrated in FIG. 4. FIG. 6 is a cross-sectional view illustrating another modified embodiment of the battery cell 100 illustrated in FIG. 4.

Compared to the embodiment illustrated in FIGS. 1 to 4, the modified embodiment illustrated in FIGS. 5 and 6 differ in the shape of the coupling hole 145 of the electrode terminal 140 and the protrusion 133b of the connection terminal 133. The contents of the descriptions of FIGS. 1 to 4, excluding the differences, may also be applied to the modified embodiment of FIGS. 5 and 6.

Referring to FIGS. 5 and 6, the connection terminal 133 may include a support portion 133a and a protrusion 133b. The protrusion 133b may be inserted into the coupling hole 145 of the electrode terminal 140.

The side surface 133c of the protrusion 133b may include an inclined surface guiding the protrusion 133b to be inserted into the coupling hole 145. The inclined surface of the protrusion 133b may have a shape in which a width of an upper side thereof is narrower than a width of a lower side thereof. At least a portion of the inner surface of the coupling hole 145 may have a shape corresponding to the inclined surface of the protrusion 133b.

In order to allow the protrusion 133b of the connection terminal 133 to be easily inserted into the coupling hole 145 of the electrode terminal 140, each of the inclined surface of the protrusion 133b of the connection terminal 133 and the inner surface of the coupling hole 145 may have a shape in which a diameter thereof increases toward the electrode assembly 120.

As illustrated in FIG. 5, the inclined surface may be formed on a side surface of the protrusion 133b from a lower portion to an upper portion of the protrusion 133b. The inclined surface formed on the side surface 133c of the protrusion 133b may have one inclination angle, but may also include a plurality of inclinations having different inclinations. The inner surface of the coupling hole 145 may include an inclined surface having an inclination corresponding to the inclined surface of the protrusion 133b.

As illustrated in FIG. 6, the inclined surface may be formed only in a portion of the side surface 133c of the protrusion 133b. In an modified embodiment of FIG. 6, the side surface 133c of the protrusion 133b may include a vertical surface 133c1 parallel to a shaft of the cell case 110 and an inclined surface 133c2 having a predetermined inclination with respect to the vertical surface 133c1. In order to correspond to the shape of the side surface 133c of the protrusion 133b, the inner surface of the coupling hole 145 may also include a vertical surface 145a parallel to the shaft of the cell case 110 and an inclined surface 145b having a predetermined inclination with respect to the vertical surface 145a.

In a modified embodiment of FIGS. 5 and 6, in a state in which the protrusion 133b of the connection terminal 133 is inserted into the coupling hole 145 of the electrode terminal 140, the inner surface of the coupling hole 145 may include a shape in contact with the inclined surface formed on the side surface 133c of the protrusion 133b. However, the shape of the inner surface of the coupling hole 145 may be variously changed as long as the shape has a structure that may guide the insertion of the protrusion 133b.

Since the modified embodiment of FIGS. 5 and 6 include the inclined surface formed on the side surface 133c of the protrusion 133b, the laser irradiated vertically to the welding space WS during laser welding may be blocked by the inclined surface, and thus the electrode assembly 120 may be prevented from being damaged by the laser irradiation.

FIG. 7 is a cross-sectional view illustrating another modified embodiment of the battery cell 100 illustrated in FIG. 4.

Compared to the embodiment illustrated in FIGS. 1 to 4, the modified embodiment illustrated in FIG. 7 is different in that the side surface 133c of the protrusion 133b includes an inclined surface, the cross-sectional reduction portion 133d of the protrusion 133b has a round shape, and an inner edge portion 145d is formed on the upper side of the coupling hole 145. The contents of the descriptions of FIGS. 1 to 4, excluding the differences, may also be applied to a modified embodiment of FIG. 7.

Similarly to the modified embodiment of FIGS. 5 and 6, the side surface 133c of the protrusion 133b in the modified embodiment illustrated in FIG. 7 may include an inclined surface guiding the protrusion 133b to be inserted into the coupling hole 145. The inclined surface of the protrusion 133b may have a shape in which a width of an upper side thereof is narrower than a width of a lower side thereof. At least a portion of the inner surface of the coupling hole 145 may have a shape corresponding to an inclined surface of the protrusion 133b. In order for the protrusion 133b of the connection terminal 133 to be easily inserted into the coupling hole 145 of the electrode terminal 140, the inclined surface of the protrusion 133b of the connection terminal 133 may have a shape in which a diameter thereof increases toward the electrode assembly 120. The description of the inclined surface among the descriptions of the modified embodiment of FIGS. 5 and 6 may also be applied to the modified embodiment of FIG. 7.

In the modified embodiment of FIG. 7, the cross-sectional reduction portion 133d of the protrusion 133b may have a round shape. Even when the cross-sectional reduction portion 133d has a round shape, a welding space WS may be formed between the cross-sectional reduction portion 133d of the protrusion 133b and the inner surface of the coupling hole 145. When welding the electrode terminal 140 and the protrusion 133b of the connection terminal 133, a curvature size of the round shape or a depth or a width of the curved surface may be set in consideration of the penetration depth, welding energy, or the like.

In the modified embodiment of FIG. 7, the electrode terminal 140 may include an inner edge portion 145d formed on the upper end of the inner surface of the coupling hole 145 and having a narrower width than that of the inner surface of the coupling hole 145. In this case, the welding space WS may be formed between the inner edge portion 145d of the electrode terminal 140 and the side surface 133c of the protrusion 133b.

That is, unlike the embodiment of FIGS. 1 to 6, in the embodiment of FIG. 7, the welding space WS may be formed between the cross-sectional reduction portion 133d of the protrusion 133b and the inner edge portion 145d of the electrode terminal 140. Accordingly, the size of the welding space WS may be increased, so that the molten metal generated during welding may be prevented from flowing out of the welding space WS and protruding outward from the upper surface 141a of the electrode terminal 140. Additionally, since the welding energy is applied to the cross-sectional reduction portion 133d of the protrusion 133b and the inner edge portion 145d of the electrode terminal 140, the welding coupling strength between the electrode terminal 140 and the connection terminal 133 may be improved.

The inner edge portion 145d may include at least one of a step region in which a step portion is formed from the inner surface of the coupling hole 145 or a chamfer region having an inclination from the inner surface of the coupling hole 145. For example, as illustrated in FIG. 7, the inner edge portion 145d may include a step region formed in the upper edge portion of the coupling hole 145. Alternatively, the inner edge portion 145d may also include a chamfer region formed to have an inclination in the upper edge portion of the coupling hole 145. The chamfer region of the coupling hole 145 may correspond to the chamfer shape of the cross-sectional reduction portion 133d of the protrusion 133b illustrated in FIGS. 1 to 5. In order to control the penetration depth of the welding, welding energy, and the like, the depth, width, shape, and/or structure of the inner edge portion 145d may be variously changed.

FIG. 8 is a perspective view illustrating a modified embodiment of the first collector 131.

As illustrated in FIG. 8, the first collector 131 may include a current collector plate 132 and a connection terminal 133. The current collector plate 132 may have a plate shape that is relatively thinner than the connection terminal 133, and the connection terminal 133 may have a cylinder shape that is relatively thicker than the current collector plate 132.

The current collector plate 132 and the connection terminal 133 may be formed integrally. For example, the first collector 131 may be formed integrally with the current collector plate 132 and the connection terminal 133 through forging processing, or the like. When forging processing is performed, the current collector plate 132 having a thin thickness and the connection terminal 133 having a relatively thick thickness may be easily formed integrally.

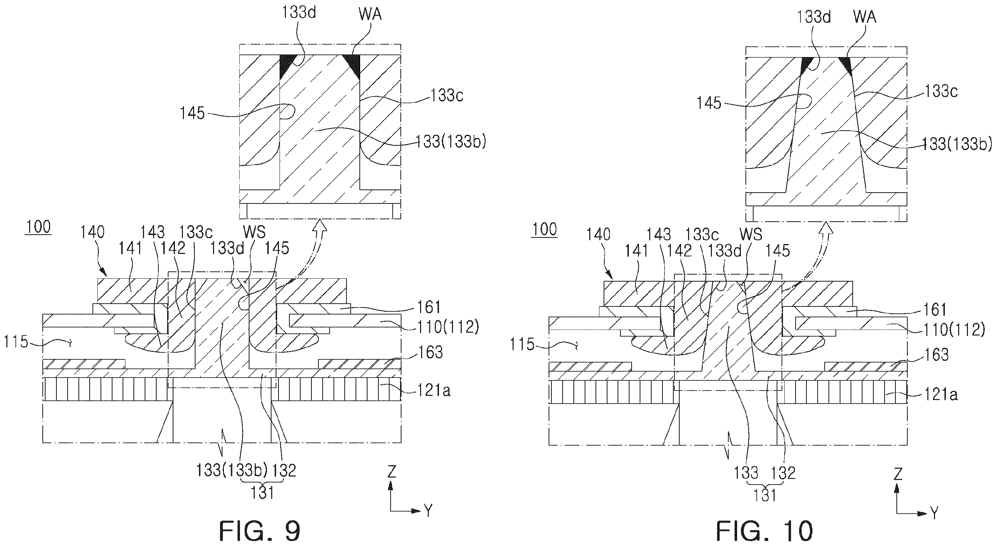

FIG. 9 is a cross-sectional view illustrating a state in which the first current collector 131 illustrated in FIG. 8 is applied to the cross-section of FIG. 4.

Compared to the battery cell 100 illustrated in FIGS. 1 to 4, a battery cell 100 illustrated in FIG. 9 is different only in that the current collecting plate 132 and the connection terminal 133 of the first current collector 131 have an integrated structure. The contents of the description of FIGS. 1 to 4, excluding the differences, may also be applied to FIG. 9.

Referring to FIG. 9, the current collecting plate 132 of the integrated first current collector 131 may be electrically connected to the first electrode tab 121a, and the connection terminal 133 may be inserted into the coupling hole 145 of the electrode terminal 140.

In a preferred embodiment of FIG. 9, the connection terminal 133 may correspond to the protrusion 133b, and the support portion 133a (see FIG. 4) may have a shape formed integrally with the current collector plate 132. In a preferred embodiment of FIG. 9, a thickness or height (T2 of FIG. 4) of the connection terminal 133 may be defined as an entire thickness or an entire height of the first current collector 131.

The protrusion 133b of the connection terminal 133 may be welded and coupled to the electrode terminal 140 by welding from the outside of the cell case 110 in a state in which the protrusion 133b is inserted into the coupling hole 145 of the electrode terminal 140. A welding space WS may be formed between the cross-sectional reduction portion 133d of the protrusion 133b and the inner surface of the coupling hole 145, and a welding area WA may be formed in at least a portion of the welding space WS by welding.

FIGS. 10 to 12 are cross-sectional views illustrating a modified embodiment of FIG. 9.

FIG. 10 illustrates a state in which a detachable first current collector 131 illustrated in FIG. 5 is changed to an integrated first current collector 131, FIG. 11 illustrates a state in which the detachable first current collector 131 illustrated in FIG. 6 is changed to an integrated first current collector 131, FIG. 12 illustrates a state in which the detachable first current collector 131 illustrated in FIG. 7 is changed to an integrated first current collector 131. The descriptions of FIGS. 1 to 9 may be applied to parts excluding the differences.

Referring to FIGS. 10 to 12, the current collecting plate 132 of the integrated first current collector 131 may be electrically connected to the first electrode tab 121a, and the connection terminal 133 may be welded to the electrode terminal 140 in a state in which the connection terminal 133 is inserted into the coupling hole 145 of the electrode terminal 140.

In the embodiment of FIGS. 10 to 12, the connection terminal 133 may correspond to the protrusion 133b of FIGS. 5 to 7, respectively. In the embodiment of FIGS. 10 to 12, the thickness or height of the connection terminal 133 may be defined as an entire thickness or an entire height of the first current collector 131.

The side surface 133c of the protrusion 133b of the connection terminal 133 may include an inclined surface guiding the protrusion 133b to be inserted into the coupling hole 145, and the inclined surface may have a shape in which a width of an upper side thereof is narrower than a width of a lower side thereof. At least a portion of the inner surface of the connection hole 145 may have a shape corresponding to an inclined surface of the protrusion 133b.

The inclined surface may be formed on the side surface 133c of the connection terminal 133 over the entire height of the connection terminal 133, as illustrated in FIG. 10 and FIG. 12, and may also be formed only on the upper side surface 133c of the connection terminal 133, as illustrated in FIG. 11.

When the side surface 133c of the connection terminal 133 includes an inclined surface, the connection terminal 133 of the first current collector 131 may be easily inserted into the coupling hole 145 of the electrode terminal 140. That is, when the connection terminal 133 is inserted and coupled to the coupling hole 145, the inclined surface of the connection terminal 133 may guide an insertion of the protrusion 133b.

FIG. 13 is a cross-sectional view of a battery cell 100 according to another embodiment.

Compared to the embodiment of FIGS. 1 to 4, the battery cell 100 illustrated in FIG. 13 differs only in the structure of the cell case 110. The contents of the description of FIGS. 1 to 4, excluding the differences, may also be applied to the battery cell 100 of FIG. 13, and the differences will be described below.

In the battery cell 100 illustrated in FIG. 13, the cell case 110 may include a side wall 111 and an upper plate 112. In a preferred embodiment of FIG. 13, the upper plate 112 may be defined as a plate of a portion to which the electrode terminal 140 is coupled.

The side wall 111 may have a tube shape, and the upper plate 112 may have a plate shape covers the top side of the accommodation space 115. The side wall 111 and the upper plate 112 may not be formed integrally but may have a separate structure. In a preferred embodiment of FIG. 13, the side wall 111 and the upper plate 112 may be coupled to each other by welding.

The cell case 110 of the present disclosure may be applied not only to a case in which the side wall 111 and the upper plate 112 have an integral structure, but also to a case in which the side wall 111 and the upper plate 112 have a separate structure, as in the embodiment illustrated in FIG. 13. For example, the embodiment of FIG. 13 may be applied to a case in which it is difficult to manufacture an integral cell case 110 by deep drawing due to an increase in the height of the side wall 111, or the like.

FIG. 14 is a cross-sectional view of a battery cell 100 according to another embodiment.

Compared to the embodiment of FIGS. 1 to 4, a battery cell 100 illustrated in FIG. 14 has a difference in a bonding structure between the cap plate 150 and the side wall 111 of the cell case 110. The contents of the descriptions of FIGS. 1 to 4, excluding the differences, may also be applied to the battery cell 100 of FIG. 14, and the differences will be described below.

The battery cell 100 illustrated in FIG. 14 may include a cell case 110, an electrode terminal 140, an electrode assembly 120, and a first current collector 131, and may further include a cap plate 150 covering a bottom side of an accommodation space 115 of the cell case 110.

The cap plate 150 may cover the accommodation space 115 on an opposite side to the electrode terminal 140. The cap plate 150 may be welded and coupled to the cell case 110. The cap plate 150 may be coupled to the side wall 111 of the cell case 110 by welding. The cap plate 150 may be welded so that a perimeter of the body 151 is in contact with the end 111a of the side wall 111.

In a preferred embodiment of FIG. 14, the cap plate 150 may be electrically connected to the second electrode tab 122a. The cap plate 150 may be coupled to the second electrode tab 122a by welding or the like, so that the cap plate 150 may be electrically connected to the second electrode tab 122a. Alternatively, the cap plate 150 may be electrically connected to the second electrode tab 122a by applying pressure to the second electrode tab 122a so that the cap plate 150 comes into contact with the second electrode tab 122a. When the second electrode tab 122a is directly electrically connected to the cap plate 150, the second current collector 135 (FIG. 4) may also not be disposed.

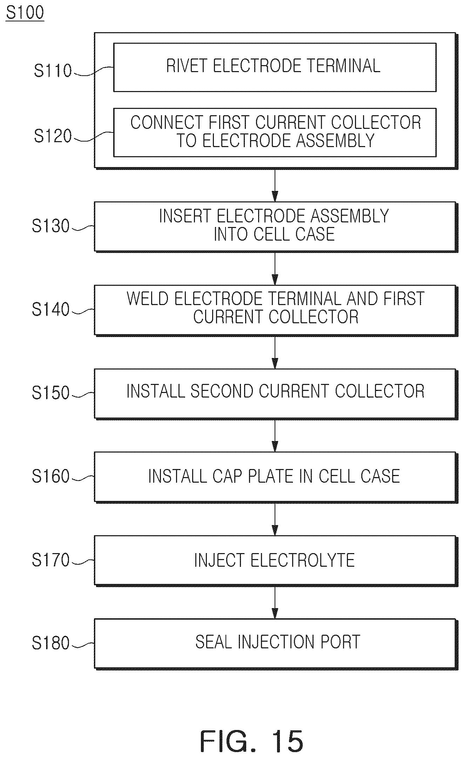

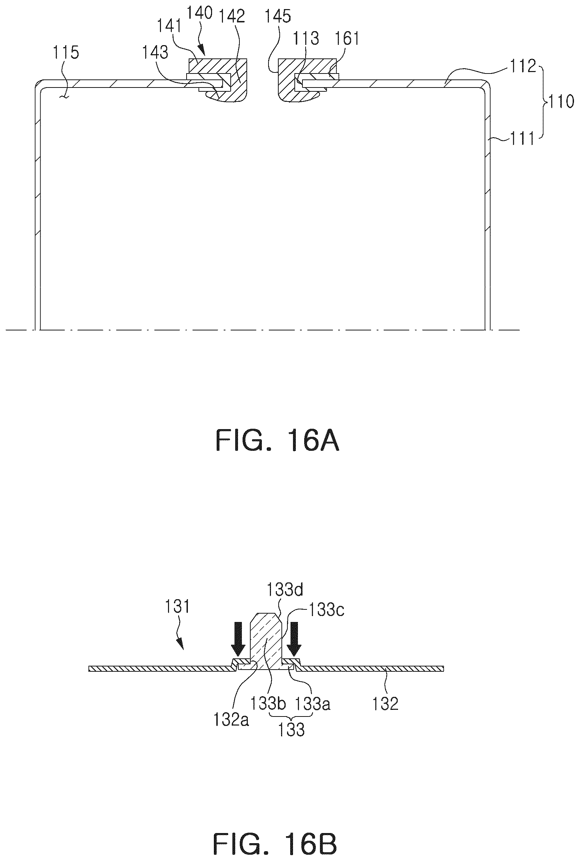

FIG. 15 is a flow chart illustrating a manufacturing method of a battery cell 100 according to a preferred embodiment of FIGS. 16A to 16E are cross-sectional views illustrating a manufacturing method of a battery cell 100.

FIGS. 16A to 16E illustrate a manufacturing method (S100) of a battery cell 100 illustrated in FIGS. 1 to 4.

Referring to FIG. 15 together with FIGS. 1 to 4, a method (S100) for manufacturing a battery cell 100 according to a preferred embodiment may include: an operation (S110) of riveting an electrode terminal 140 to a through-hole 113 formed in an upper plate 112 of a cell case 110 having a shape in which a bottom side is open; an operation (S120) of electrically connecting a first current collector 131 to an electrode assembly 120; an operation (S130) of inserting the electrode assembly 120 into an accommodation space 115 of the cell case 110; and a welding operation (S140) of welding the electrode terminal 140 and the first current collector 131. The first current collector 131 may include a connection terminal 133 having a protrusion 133b inserted into a coupling hole 145. A welding space WS, which is a space for welding between the protrusion 133b and the electrode terminal 140, may be formed between an upper end of a side surface 133c of the protrusion 133b and an inner surface of the coupling hole 145. In the welding operation (S140), energy may be applied to the welding space WS from the outside of the cell case 110 in a state in which the protrusion 133b is inserted into the coupling hole 145, thus welding the electrode terminal 140 and the protrusion 133b.

Referring to FIGS. 15 to 16e together with FIGS. 1 to 4, a manufacturing method (S100) of a battery cell 100 will be described. The description of the battery cell 100 described with reference to FIGS. 1 to 14 may also be applied to the manufacturing method (S100) of the battery cell 100.

Referring to FIG. 16A, the cell case 110 may include a side wall 111 and an upper plate 112, and a through-hole 113 may be formed in the upper plate 112. In the operation (S110) of riveting the electrode terminal 140, the electrode terminal 140 may be inserted into the through-hole 113 from the outside of the upper plate 112. The first portion 141 of the electrode terminal 140 may be disposed on the outside of the upper plate 112, and the second portion 142 and the third portion 143 may be inserted into the through-hole 113. By a riveting process, a third portion 143 may be deformed radially outward, and the electrode terminal 140 may be fixed to the upper plate 112.

When the riveting process is performed in a state in which a first gasket 161 is disposed on the outside of the electrode terminal 140, the first gasket 161 may be disposed between the electrode terminal 140 and the upper plate 112. The first gasket 161 may seal and/or insulate between the electrode terminal 140 and the upper plate 112.

The operation (S120) of electrically connecting the first current collector 131 may include a process of preparing the first current collector 131.

Referring to FIG. 16B, the first current collector 131 may include a connection terminal 133 having a protrusion 133b inserted into the coupling hole 145. The first current collector 131 may further include a current collector plate 132 electrically connecting a first electrode tab of the electrode assembly 120 and the connection terminal 133. That is, the first current collector 131 may include a current collector plate 132 and a connection terminal 133. The connection terminal 133 may include a support portion 133a coupled to the current collector plate 132 and a protrusion portion 133b extending upwardly from the support portion 133a. The protrusion portion 133b may include a cross-sectional reduction portion 133d formed on the upper end of the side surface 133c of the side surface 133b of the protrusion portion 133b and having a narrower width than the side surface 133c of the protrusion portion 133b.

The current collector plate 132 and the connection terminal 133 may be manufactured separately and then coupled to each other by welding. The current collecting plate 132 may have a relatively thin plate shape compared to the connection terminal 133, and the connection terminal 133 may have a relatively thick cylinder shape compared to the current collecting plate 132, so that when the current collecting plate 132 and the connection terminal 133 are manufactured separately, each of the current collecting plate 132 and the connection terminal 133 may be easily manufactured.

The connection terminal 133 may be coupled to the current collecting plate 132 in a state in which the protrusion 133b is disposed to pass through the opening 132a of the current collecting plate 132. For example, the connection terminal 133 and the current collecting plate 132 may be bonded to each other by welding.

Meanwhile, as in the embodiment illustrated in FIGS. 8 to 12, the current collecting plate 132 and the connection terminal 133 may be formed integrally by a forging process. In the case in which the current collector plate 132 and the connection terminal 133 are integrally formed, the process of coupling the connection terminal 133 and the current collector plate 132 may be omitted, so that the assembly process of the battery cell 100 may be simplified.

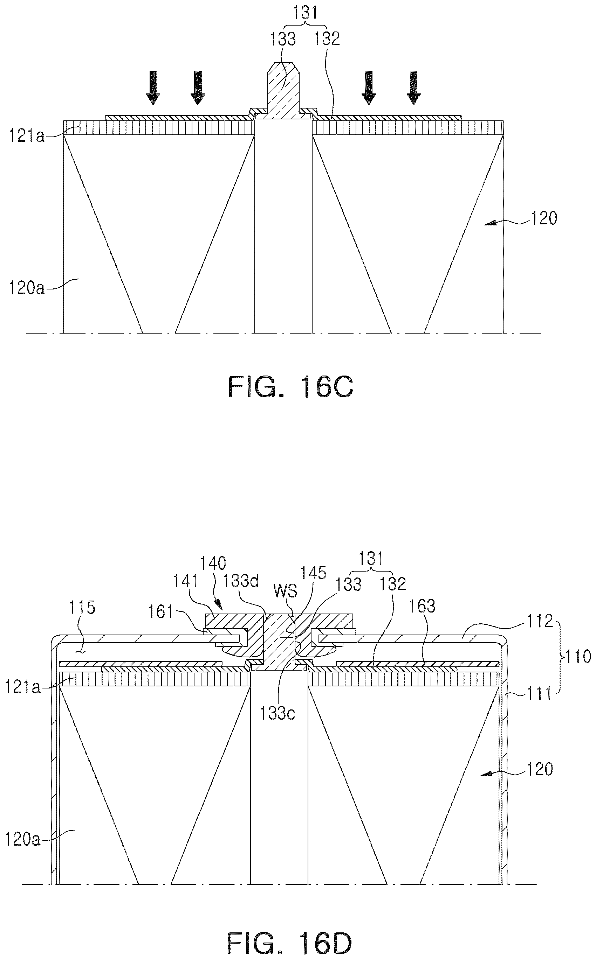

Referring to FIG. 16C, the operation (S120) of electrically connecting the first current collector 131 to the electrode assembly 120 may include a process of electrically connecting the first current collector 131 to the first electrode tab 121a of the electrode assembly 120. The first current collector 131 may be welded to the first electrode tab 121a. For example, the first current collector 131 may be ultrasonically welded, laser welded, or resistance welded to the first electrode tab 121a.

The order of the operation (S110) of riveting the electrode terminal 140 to the through-hole 113 formed in the upper plate 112 and the operation (S120) of electrically connecting the first current collector 131 to the electrode assembly 120 may be changed or performed in parallel.

Referring to FIG. 16D together with FIG. 4, the operation (S130) of inserting the electrode assembly 120 into the accommodation space 115 of the cell case 110 may be performed by inserting the electrode assembly 120 into the cell case 110 through an open bottom portion of the cell case 110. The electrode assembly 120 may be inserted into the cell case 110 in a state in which the first current collector 131 is disposed so as to face the lower portion of the electrode terminal 140. The insulating member 163 may be disposed between the upper plate 112 and the first current collector 131. Before accommodating the electrode assembly 120 in the cell case 110, the electrode assembly 120 may have a state in which the first current collector 131 is connected to the first electrode tab 121a, and the cell case 110 may have a state in which the electrode terminal 140 is riveted to the upper plate 112.

When the electrode assembly 120 is inserted into the cell case 110, the protrusion 133b of the first current collector 131 may be inserted into and coupled to the coupling hole 145 formed in the lower portion of the electrode terminal 140. A welding space WS, which is a space for welding between the protrusion 133b and the electrode terminal 140, may be formed between the upper end of the side surface 133c of the protrusion 133b and the inner surface of the coupling hole 145.

In a preferred embodiment of FIGS. 4 and 16D, the protrusion 133b may include a cross-sectional reduction portion 133d having a narrower width than that of the side surface 133c of the protrusion 133b at an upper edge of the side surface 133c of the protrusion 133b. In this case, the welding space WS may be formed between the inner surface of the coupling hole 145 and the cross-sectional reduction portion 133d of the protrusion 133b.

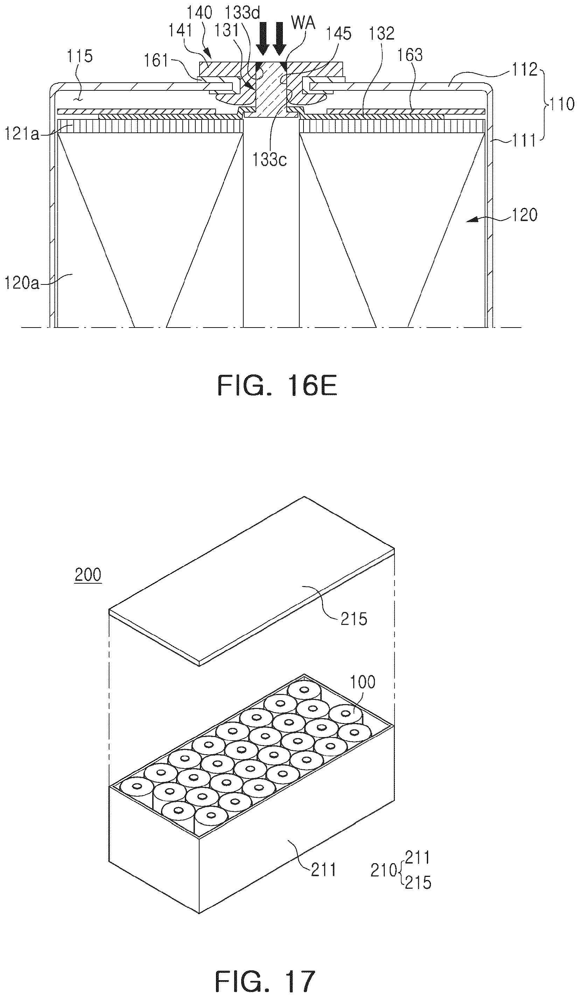

Referring to FIG. 16E together with FIG. 4, in the welding operation (S140), the electrode terminal 140 and the first current collector 131 may be welded, thus electrically connecting the electrode terminal 140 and the first current collector 131.

In the welding operation (S140), the electrode terminal 140 and the protrusion 133b may be welded by applying energy to the welding space WS from the outside of the cell case 110 in a state in which the protrusion 133b is inserted into the coupling hole 145. For example, the electrode terminal 140 and the protrusion 133b of the connection terminal 133 may be coupled to each other by laser welding in the welding space WS between the upper end of the side surface 133c of the protrusion 133b and the inner surface of the coupling hole 145. By the welding operation (S140), a welding area WA may be formed in at least a portion of the welding space WS. The welding area WA may be formed by a molten bead that is cured after the electrode terminal 140 and/or the protrusion 133b of the connection terminal 133 is melted by welding heat.

Meanwhile, in a preferred embodiment of FIGS. 7 and 12, the electrode terminal 140 may include an inner edge portion 145d formed in an upper end of the inner surface of the coupling hole 145 and having a narrower width than the inner surface of the coupling hole 145. In this case, the welding space WS may be formed between the inner edge portion 145d of the electrode terminal 140 and the side surface 133c of the protrusion 133b. In a preferred embodiment of FIGS. 7 and 12, in the welding operation (S140), the electrode terminal 140 and the protrusion 133b may be welded by applying energy to the welding space WS from the outside of the cell case 110 in a state in which the protrusion 133b is inserted into the coupling hole 145.

Since the welding energy is intensively absorbed on surfaces of the protrusion 133b and the electrode terminal 140 forming the welding space WS, welding between the protrusion 133b and the electrode terminal 140 may be performed even with a small welding energy, so that damage to the electrode assembly 120 due to welding heat may be significantly reduced. Since welding between the protrusion 133b and the electrode terminal 140 is able to be performed even with a small welding energy, it may be possible to prevent the laser from passing through a gap between the protrusion 133b and the electrode terminal 140 during laser welding and being irradiated to the electrode assembly 120. Accordingly, the electrode assembly 120 may be prevented from being damaged by irradiating the laser to the electrode assembly 120. Additionally, in a state in which the protrusion 133b of the connection terminal 133 provided on the first collector 131 is exposed to the outside, the electrode terminal 140 and the protrusion 133b of the connection terminal 133 may be welded from the outside of the cell case 110, so that the welding shape and welding quality of the welding area WA may be easily confirmed.

According to a preferred embodiment, since the welding is performed from the outside of the cell case 110, it may be possible to prevent welding foreign substances (for example, foreign substances such as fume or spatter) from being generated inside the battery cell 100. Additionally, since metal foreign substances such as fume or spatter are not generated inside the cell case 110, a dust collection operation on the inside of the case is not required during welding work, and accordingly, the costs for installing equipment for dust collection may be reduced.

Meanwhile, the cell case 110 may include a tube-shaped side wall 111 having an accommodation space 115 formed therein and a plate-shaped upper plate 112 covering a top side of the accommodation space 115. The side wall 111 and the upper plate 112 may be formed integrally. The cell case 110 may be manufactured in a shape in which the side wall 111 and the upper plate 112 are formed integrally by deep drawing a metal sheet. When the cell case 110 is formed integrally, a process of bonding the side wall 111 and the upper plate 112 is not required, so that the manufacturing of the cell case 110 and/or the battery cell 100 may be facilitated and workability may be improved.

Referring again to FIG. 15, the manufacturing method (S100) of a battery cell 100 according to a preferred embodiment may include an operation (S150) of installing a second current collector 135. The second current collector 135 may be electrically connected to the second electrode tab 122a of the electrode assembly 120. The second current collector 135 may be welded and coupled to the second electrode tab 122a, but may also be electrically connected in a state in which the second current collector 135 is in contact with the second electrode tab 122a. The operation (S150) of placing the second current collector 135 may be performed before the operation (S130) of inserting the electrode assembly 120 into the cell case 110, or may be performed after the operation (S140) of welding the electrode terminal 140 and the first current collector 131. Meanwhile, in the case in which the second electrode tab 122a and the cap plate 150 are directly electrically connected, the operation (S150) of placing the second current collector 135 may not be performed.

The method (S100) for manufacturing a battery cell 100 according to a preferred embodiment may further include an operation (S160) of installing a cap plate 150 on an open bottom side of the cell case 110. The operation (S160) of installing the cap plate 150 may be performed by coupling the cap plate 150 to the cell case 110 crimping or welding. For example, as illustrated in FIG. 3, the cap plate 150 may be coupled to the end 111a of the side wall 111 through a beading process and a crimping process. In contrast, as illustrated in FIG. 14, the cap plate 150 may be bonded to the end 111a of the side wall 111 by welding.

The manufacturing method (S100) of a battery cell 100 according to a preferred embodiment may further include an operation of injecting an electrolyte (S170). The electrolyte injection may be performed through an injection port 152 formed in at least one of the cap plate 150, the electrode terminal 140, or the cell case 110. For example, an electrolyte may be injected into the accommodation space 115 of the cell case 110 through the injection port 152 formed in the cap plate 150.

After performing the operation of injecting an electrolyte (S170), an injection port sealing operation (S180) may be performed. The injection port sealing operation (S180) may seal the injection port 152 with an injection port stopper 153.

Accordingly, subsequent processes such as a formation process (chemical reaction process) may be performed.

Meanwhile, the manufacturing method (S100) of the battery cell 100 described above is only an example, and depending on the shape or structure of the battery cell 100, the order may be changed, some operations may not be performed, or additional operations may be performed in the middle.

FIG. 17 is a perspective view of a battery module according to a preferred embodiment.

Referring to FIG. 17, a battery module 200 according to a preferred embodiment may include a plurality of battery cells 100 and a module housing 210 accommodating the plurality of battery cells 100.

The battery cell 100 provided in the battery module 200 may be applied to at least one of the battery cells 100 described with reference to FIGS. 1 to 14.

The battery module 200 of the present disclosure is not limited in a specific type thereof as along as the battery module 200 includes a plurality of battery cells 100. For example, the battery module 200 of the present disclosure is defined as including all of a battery pack or an energy storage device.

The plurality of battery cells 100 may be accommodated in a module housing 210.

The module housing 210 may provide a space for accommodating the plurality of battery cells 100. The module housing 210 may include a housing body 211 forming a space for accommodating the plurality of battery cells 100 and a housing cover 215 covering upper sides of the plurality of battery cells 100.

The contents described above are merely examples of applying the principles of the present disclosure. Additionally, some components may be deleted and implemented in the above-described example embodiments, and each of the embodiments may be combined and implemented with each other.

(Aspect 1) A battery cell, comprising: a cell case including a side wall having an accommodation space formed therein and an upper plate having a through-hole formed therein; an electrode terminal coupled to the through-hole and having a coupling hole formed therein; an electrode assembly disposed in the accommodation space of the cell case; and a first current collector electrically connecting the electrode terminal and the electrode assembly, wherein the first current collector includes a connection terminal having a protrusion inserted into the coupling hole, a welding space, which is a space for welding between the protrusion and the electrode terminal, is formed between an upper end of a side surface of the protrusion and an inner surface of the coupling hole, and a welding area is formed in the welding space by welding performed on an outer side of the cell case in a state in which the protrusion is inserted into the coupling hole.

(Aspect 2) The battery cell of aspect 1, wherein the protrusion includes a cross-sectional reduction portion formed on the upper end of the side surface of the protrusion and having a narrower width than the side surface of the protrusion, and the welding space is formed between the inner surface of the coupling hole and the cross-sectional reduction portion of the protrusion.

(Aspect 3) The battery cell of aspect 2, having one or more of the following characteristics (i) to (ii), respectively alone or in combination: (i) the cross-sectional reduction portion has a shape in which a width of the cross-sectional reduction portion becomes narrower toward an upper side of the cross-sectional reduction portion, and/or (ii) the cross-sectional reduction portion has a chamfer shape or a round shape.

(Aspect 4) The battery cell of any one of aspects 1 to 3, wherein the electrode terminal includes an inner edge portion formed on an upper end of the inner surface of the coupling hole and having a narrower width than the inner surface of the coupling hole, and the welding space is formed between the inner edge portion of the electrode terminal and the side surface of the protrusion.

(Aspect 5) The battery cell of aspect 4, wherein the inner edge portion includes at least one of a step region having a step portion formed from the inner surface of the coupling hole or a chamfer region having an inclination from the inner surface of the coupling hole.

(Aspect 6) The battery cell of any one of aspects 1 to 5, wherein a side surface of the protrusion includes an inclined surface guiding the protrusion to be inserted into the coupling hole, the inclined surface has a shape in which a width of an upper side thereof is narrower than a width of a lower side thereof, and at least a portion of the inner surface of the coupling hole has a shape corresponding to the inclined surface of the protrusion.

(Aspect 7) The battery cell of any one of aspects 1 to 6, wherein the protrusion is provided as a solid type in which an interior thereof is filled.

(Aspect 8) The battery cell of nay one of aspects 1 to 7, wherein the first current collector further includes a current collecting plate electrically connected to a first electrode tab of the electrode assembly, and the current collecting plate is connected to the connection terminal.

(Aspect 9) The battery cell of aspect 8, wherein the connection terminal further includes a support portion coupled to the current collecting plate, and the protrusion extends from the support portion and has a shape passing through an opening formed in the current collecting plate.

(Aspect 10) The battery cell of aspect 8, wherein the current collecting plate and the connection terminal are manufactured separately and then coupled to each other, and/or wherein the current collecting plate and the connection terminal are integrally formed.

(Aspect 11) The battery cell of any one of aspects 1 to 10, having one or more of the following characteristics (i) to (ii), respectively alone or in combination: (i) the cell case has a circular cross-sectional shape, the through-hole is formed in a center of the upper plate, and the electrode terminal is riveted to the through-hole of the cell case, (ii) the side wall has a tube shape, and the upper plate has a plate shape covering a top side of the accommodation space, and the side wall and the upper plate are integrally formed.

(Aspect 12) The battery cell of any one of aspects 1 to 11, further comprising: a cap plate covering a bottom side of the accommodation space of the cell case, the cap plate is coupled to the cell case by crimping or welding.

(Aspect 13) A manufacturing method of a battery cell, comprising: riveting an electrode terminal into a through-hole formed in an upper plate of a cell case having a shape in which a bottom side is open; electrically connecting a first current collector to an electrode assembly; inserting the electrode assembly into an accommodation space of the cell case; and a welding operation of welding the electrode terminal and the first current collector, wherein the first current collector includes a connection terminal having a protrusion inserted into a coupling hole of the electrode terminal, a welding space, which is a space for welding between the protrusion and the electrode terminal, is formed between an upper end of a side surface of the protrusion and an inner surface of the coupling hole, and in the welding operation, energy is applied to the welding space from an outside of the cell case in a state in which the protrusion is inserted into the coupling hole, so that the electrode terminal and the protrusion are welded.

(Aspect 14) The manufacturing method of a battery cell of aspect 13, having one or more of the following characteristics (i) to (iii), respectively alone or in combination: (i) the protrusion includes a cross-sectional reduction portion formed on the upper end of the side surface of the protrusion and having a narrower width than the side surface of the protrusion, and the welding space is formed between the inner surface of the coupling hole and the cross-sectional reduction portion of the protrusion, (ii) the electrode terminal includes an inner edge portion formed on an upper end of the inner surface of the coupling hole and having a narrower width than the inner surface of the coupling hole, and the welding space is formed between the inner edge portion of the electrode terminal and the side surface of the protrusion, and/or (iii) the first current collector further includes a current collector plate electrically connecting a first electrode tab of the electrode assembly and the connection terminal, and the current collector plate and the connection terminal are manufactured separately and then coupled by welding, or formed integrally by a forging process.

(Aspect 15) A battery module, comprising: a plurality of battery cells; and a module housing accommodating the plurality of battery cells, wherein at least one of the plurality of battery cells includes: a cell case including a side wall having an accommodation space formed therein and an upper plate having a through-hole formed therein; an electrode terminal coupled to the through-hole and having a coupling hole formed therein; an electrode assembly disposed in the accommodation space of the cell case; and a first current collector electrically connecting the electrode terminal and the electrode assembly, wherein the first current collector includes a connection terminal having a protrusion inserted into the coupling hole, a welding space, which is a space for welding between the protrusion and the electrode terminal, is formed between an upper end of a side surface of the protrusion and an inner surface of the coupling hole, and a welding area is formed in the welding space through welding performed from an outside of the case in a state in which the protrusion is inserted into the coupling hole.

## Claims

1. A battery cell, comprising:
a cell case including a side wall having an accommodation space formed therein and an upper plate having a through-hole formed therein;
an electrode terminal coupled to the through-hole and having a coupling hole formed therein;
an electrode assembly disposed in the accommodation space of the cell case; and
a first current collector electrically connecting the electrode terminal and the electrode assembly,
wherein the first current collector includes a connection terminal having a protrusion inserted into the coupling hole,
a welding space, which is a space for welding between the protrusion and the electrode terminal, is formed between an upper end of a side surface of the protrusion and an inner surface of the coupling hole, and
a welding area is formed in the welding space by welding performed on an outer side of the cell case in a state in which the protrusion is inserted into the coupling hole.

2. The battery cell of claim 1,
wherein the protrusion includes a cross-sectional reduction portion formed on the upper end of the side surface of the protrusion and having a narrower width than the side surface of the protrusion, and
the welding space is formed between the inner surface of the coupling hole and the cross-sectional reduction portion of the protrusion.

3. The battery cell of claim 2, having one or more of the following characteristics (i) to (ii), respectively alone or in combination:
(i) the cross-sectional reduction portion has a shape in which a width of the cross-sectional reduction portion becomes narrower toward an upper side of the cross-sectional reduction portion, and/or
(ii) the cross-sectional reduction portion has a chamfer shape or a round shape.

4. The battery cell of any one of claims 1 to 3,
wherein the electrode terminal includes an inner edge portion formed on an upper end of the inner surface of the coupling hole and having a narrower width than the inner surface of the coupling hole, and
the welding space is formed between the inner edge portion of the electrode terminal and the side surface of the protrusion.

5. The battery cell of claim 4,
wherein the inner edge portion includes at least one of a step region having a step portion formed from the inner surface of the coupling hole or a chamfer region having an inclination from the inner surface of the coupling hole.

6. The battery cell of any one of claims 1 to 5,
wherein a side surface of the protrusion includes an inclined surface guiding the protrusion to be inserted into the coupling hole,
the inclined surface has a shape in which a width of an upper side thereof is narrower than a width of a lower side thereof, and
at least a portion of the inner surface of the coupling hole has a shape corresponding to the inclined surface of the protrusion.

7. The battery cell of any one of claims 1 to 6,
wherein the protrusion is provided as a solid type in which an interior thereof is filled.

8. The battery cell of nay one of claims 1 to 7,
wherein the first current collector further includes a current collecting plate electrically connected to a first electrode tab of the electrode assembly, and
the current collecting plate is connected to the connection terminal.

9. The battery cell of claim 8,
wherein the connection terminal further includes a support portion coupled to the current collecting plate, and
the protrusion extends from the support portion and has a shape passing through an opening formed in the current collecting plate.

10. The battery cell of claim 8,
wherein the current collecting plate and the connection terminal are manufactured separately and then coupled to each other, and/or
wherein the current collecting plate and the connection terminal are integrally formed.

11. The battery cell of any one of claims 1 to 10, having one or more of the following characteristics (i) to (ii), respectively alone or in combination:
(i) the cell case has a circular cross-sectional shape, the through-hole is formed in a center of the upper plate, and the electrode terminal is riveted to the through-hole of the cell case,
(ii) the side wall has a tube shape, and the upper plate has a plate shape covering a top side of the accommodation space, and the side wall and the upper plate are integrally formed.

12. The battery cell of any one of claims 1 to 11, further comprising:
a cap plate covering a bottom side of the accommodation space of the cell case,
the cap plate is coupled to the cell case by crimping or welding.

13. A manufacturing method of a battery cell, comprising:
riveting an electrode terminal into a through-hole formed in an upper plate of a cell case having a shape in which a bottom side is open;
electrically connecting a first current collector to an electrode assembly;
inserting the electrode assembly into an accommodation space of the cell case; and
a welding operation of welding the electrode terminal and the first current collector,
wherein the first current collector includes a connection terminal having a protrusion inserted into a coupling hole of the electrode terminal,
a welding space, which is a space for welding between the protrusion and the electrode terminal, is formed between an upper end of a side surface of the protrusion and an inner surface of the coupling hole, and
in the welding operation, energy is applied to the welding space from an outside of the cell case in a state in which the protrusion is inserted into the coupling hole, so that the electrode terminal and the protrusion are welded.

14. The manufacturing method of a battery cell of claim 13, having one or more of the following characteristics (i) to (iii), respectively alone or in combination:
(i) the protrusion includes a cross-sectional reduction portion formed on the upper end of the side surface of the protrusion and having a narrower width than the side surface of the protrusion, and the welding space is formed between the inner surface of the coupling hole and the cross-sectional reduction portion of the protrusion,
(ii) the electrode terminal includes an inner edge portion formed on an upper end of the inner surface of the coupling hole and having a narrower width than the inner surface of the coupling hole, and the welding space is formed between the inner edge portion of the electrode terminal and the side surface of the protrusion, and/or
(iii) the first current collector further includes a current collector plate electrically connecting a first electrode tab of the electrode assembly and the connection terminal, and the current collector plate and the connection terminal are manufactured separately and then coupled by welding, or formed integrally by a forging process.

15. A battery module, comprising:
a plurality of battery cells; and
a module housing accommodating the plurality of battery cells,
wherein at least one of the plurality of battery cells includes:
a cell case including a side wall having an accommodation space formed therein and an upper plate having a through-hole formed therein;
an electrode terminal coupled to the through-hole and having a coupling hole formed therein;
an electrode assembly disposed in the accommodation space of the cell case; and
a first current collector electrically connecting the electrode terminal and the electrode assembly,
wherein the first current collector includes a connection terminal having a protrusion inserted into the coupling hole,
a welding space, which is a space for welding between the protrusion and the electrode terminal, is formed between an upper end of a side surface of the protrusion and an inner surface of the coupling hole, and
a welding area is formed in the welding space through welding performed from an outside of the case in a state in which the protrusion is inserted into the coupling hole.
